# EUROPEAN PATENT APPLICATION

(11) **EP 1 447 652 A1**
(43) Date of publication of application: **18.08.2004**
(21) Application number: 03003532.3
(22) Date of filing: 17.02.2003
(51) Int. Cl.: G01K 11/12, G01K 1/14

(54) **Thermal indicator**

(71) Applicant: Light Diamond LLC, Albany, NY 12207 (US)
(72) Inventor: Johnston, Mark Light Diamond LLC, Albany, NY 12207 (US)
(74) Representative: Luppi, Luigi

(57) **Abstract**

A Cooking item (6, 7, 8) comprises gripping means (9) and a thermal indicator element (1) that is so arranged and configured as to visually indicate that a threshold thermal condition of an intended gripping part of said gripping means (9) has occurred.

## Description

The present invention relates to thermal indicators, particularly those thermal indicators made of thermochromatic material associated to cooking items.

Several authoritative figures show that kitchen is a place where a high number of domestic accidents occur. Many accidents relate to scorches or burns that a person suffers when touches an hot object not being sufficiently aware about its high temperature. In fact, cooking items change their condition from a "cold" safe temperature, substantially equal to the one of the environment, to a "hot" dangerous temperature when in use especially on a heating source. In this case, a user has to protect his body members from burning by wearing protective articles like cooking gloves or similar.

Thermal indicators using thermochromatic material are known from prior art.

US 4805188 discloses thermal indicators which provide visual evidence of the temperature of an edible content in a heating vessel or container so as to control heating and cooking thereof.

Other known thermal indicators are fixed to handle means of a heating vessel or container and are received in corresponding recesses obtained in the above mentioned handle means.

A drawback of the prior art is that the known thermal indicators are specifically designed to be mounted on a particular cooking item. Thus, it is not convenient to remove a thermal indicator from a certain cooking item and set the same thermal indicator on another cooking item.

A further drawback of the prior art is that the known thermal indicators cannot be mounted on cooking items that were not originally expected to be equipped with a thermal indicator, without replacing parts of the handle means.

An object of the present invention is to improve thermal indicators, in particular for cooking items.

A further object of the invention is to provide a thermal indicator that improves safety of a cooking item.

Another object is to provide a thermal indicator element made of thermochromatic material associatable to cooking items that were not originally designed to be equipped with said indicator.

According to the invention, there is provided a cooking item comprising gripping means and a thermal indicator element, characterised in that said thermal indicator element is so arranged and configured as to visually indicate that a threshold thermal condition of an intended gripping part of said gripping means has occurred.

In one embodiment, said thermal indicator element is made of a thermochromatic material.

Said thermal indicator element may be so shaped as to at least partially surround a portion of said cooking item.

Said portion may comprise said gripping means suitable for gripping and handling the cooking item.

Owing to these embodiments of the invention, it is possible to obtain a thermal indicator element that visually reveals the dangerous temperature of the gripping means, like handles and/or knobs.

Said thermal indicator element may at least partially protrude from a predetermined portion of said cooking item.

Owing to this embodiment of the invention, it is possible to produce a thermal indicator element that prevents edible material, dirt or dust from entering into recesses obtained in said predetermined portion which are suitable for receiving said thermal indicator element.

The invention may be better understood and carried out with reference to the accompanying drawings, which show some exemplifying and not limiting embodiments thereof, in which:
Figure 1 is an enlarged side view of a thermal indicator element according to one embodiment of the invention;
Figure 2 is an enlarged front view of the thermal indicator element of Figure 1;
Figure 3 is a front view of a lid having a handle provided with the thermal indicator element of Figure 2;
Figure 4 is a front view of a pot having a handle provided with the thermal indicator element of Figure 2;
Figure 5 is a plan view of the pot of Figure 4;
Figure 6 is a front view of a pan having a handle provided with the thermal indicator element of Figure 2;
Figure 7 is a plan view of the pan of Figure 6;
Figure 8 is a front view of a lid having a knob provided with a thermal indicator element according to the invention;
Figure 9 is a front view of a pot having a handle provided with a thermal indicator element according to the invention;
Figure 10 is a plan view of the pot of Figure 9;
Figure 11 is a front view of a pan having a handle provided with a thermal indicator element according to the invention;
Figure 12 is a plan view of the pan of Figure 11;
Figure 13 is a front view of a lid having a knob provided with a thermal indicator element according to the invention;
Figure 14 is a front view of a pot having a handle provided with a thermal indicator element according to the invention;
Figure 15 is a plan view of the pot of Figure 14;
Figure 16 is a front view of a pan having a handle provided with a thermal indicator element according to the invention;
Figure 17 is a plan view of the pan of Figure 16.

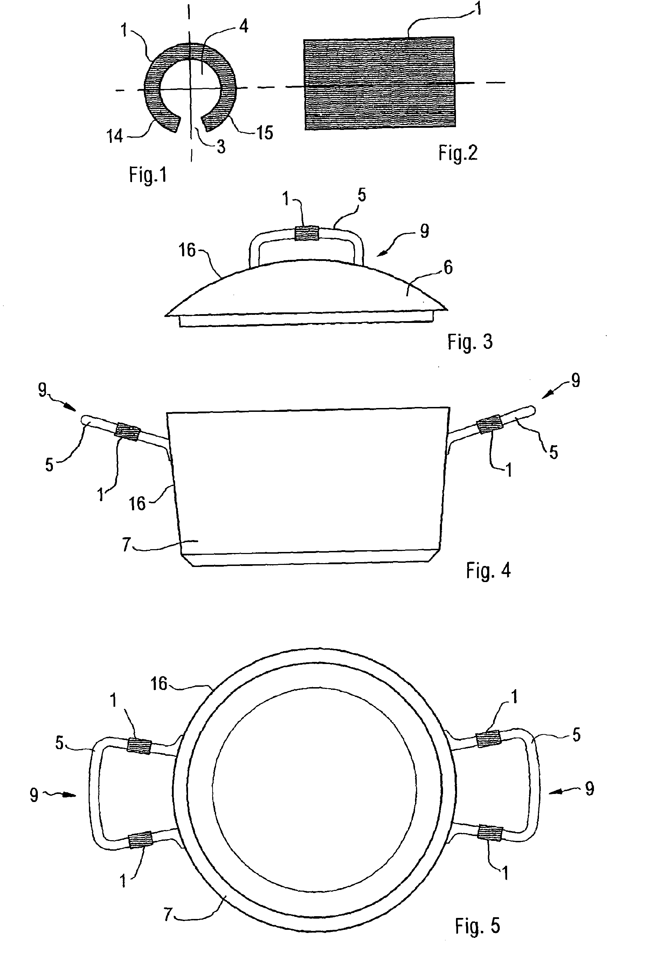

Figure 1 and 2 show an embodiment of a thermal indicator element 1 to be associated with a cooking item. The thermal indicator element 1 has a substantially annular body provided with a looped transverse section, in particular it is shaped as a hollow cylinder 2 provided with a cavity 4 and an opening 3 that extends along the longitudinal dimension of the hollow cylinder 2.

The opening 3 defines a first branch 14 and a second branch 15 of the looped transverse section of the cylinder, that may be forced to space apart from each other so as to allow a part of gripping means 9 of a cooking item to pass through the opening 3 and fit in the cavity 4.

The thermal indicator element 1 may have desired dimensions so as to surround gripping means 9 of different shape.

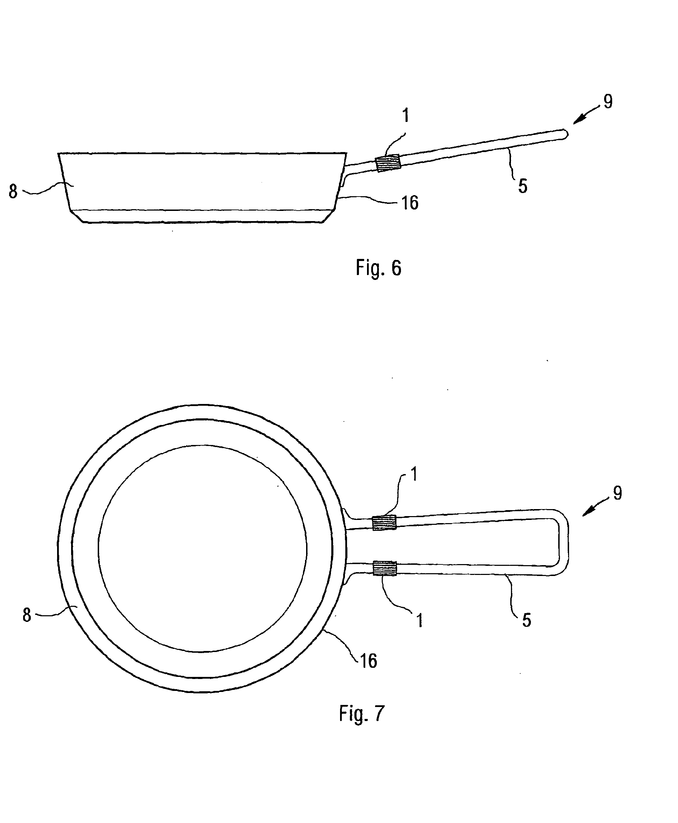

As shown in Figures 3 to 7, the gripping means 9 comprises a handle 5 having a circular cross section and fixed to an external wall 16 of a cooking item, such cooking item being a lid 6, or a pot 7, or a pan 8.

Advantageously, the thermal indicator element 1 is made of a thermochromatic material showing a reversible colour change at a preset temperature or within a range of temperatures. The composition of thermochromatic material is designed to produce the desired colour response. It is desirable to have distinct colour changes so as to provide a more readily perceivable warning to a user, even to people who have a lower perceivable level of danger like children. As the cooking item is in contact with a heating source, the gripping means 9 becomes warmer until it reaches a safe limit temperature, that could be about 50°C, as several countries regulations provide for. The thermal indicator element 1, being in direct contact with the gripping means 9, is substantially at the same temperature of the gripping means 9, so it changes colour, for example from green to red. Thus people are alerted about the risk of burning, and even children can easily recognize these colours associating them to the colours of a traffic light in which the green colour indicates a safe situation and the red colour a dangerous situation. Colour changes may be otherwise chosen so as a colour-blind person may easily recognize them.

Advantageously, the thermochromatic material that forms the thermal indicator element 1, is classified as a non-toxic anallergic food product, time inalterable material and suitable for being washed in a dishwasher and with common washing-up substances.

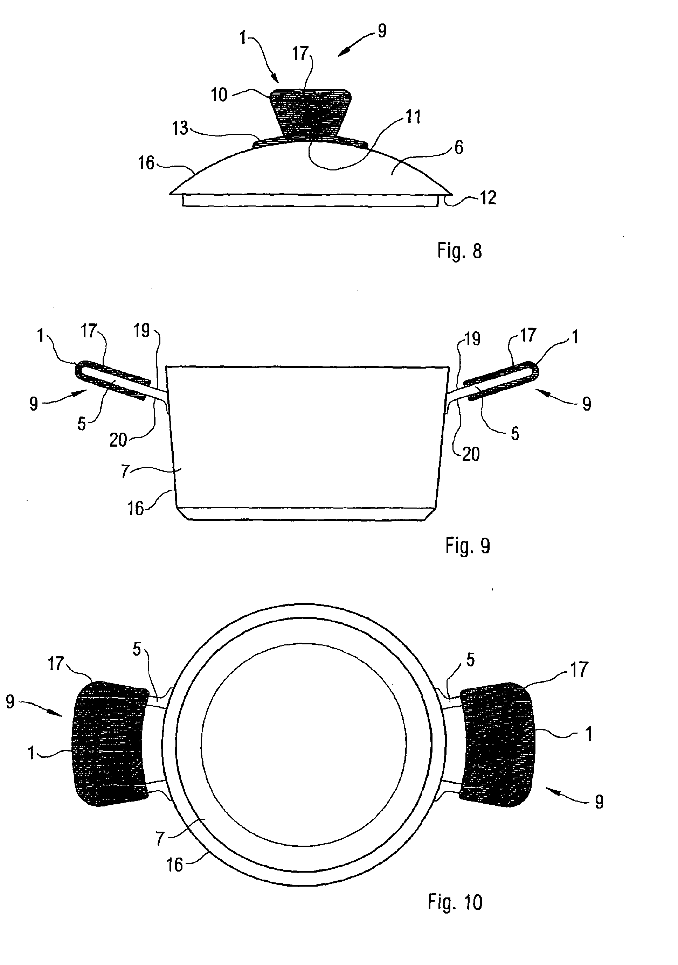

Referring to the embodiment shown in Figure 8, the gripping means 9 of the lid 6 comprises a knob 10 provided with insulating means 17 that forms a body thereof, that insulating means 17 being made of thermochromatic material and constituting therefore the above-mentioned thermal indicator element 1. The thermal indicator element 1 comprises a shell 13 covering a part of the lid 6, said shell 13 extending from the centre 11 of the lid 6 toward an end edge 12 thereof for a preset distance. The shell 13 is shapingly couplable with said part of the lid 6. In this case, the thermochromatic material of the thermal indicator element 1 is also formulated to provide the required heat resistance.

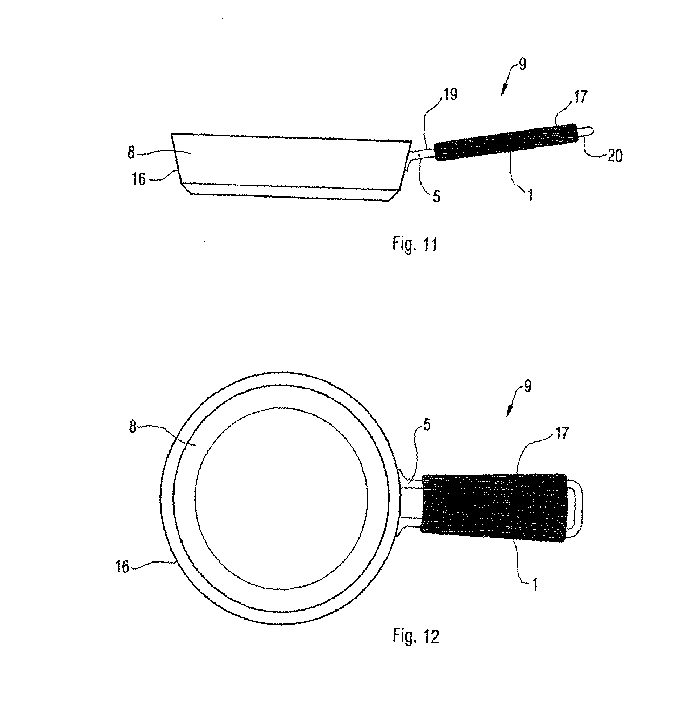

Both the pot 7 shown in Figures 9 and 10 and the pan 8 shown in Figure 11 and 12 comprise gripping means 9 provided with the handle 5 covered with the insulating means 17, such insulating means 17 being made of thermochromatic material constituting the thermal indicator element 1. The thermal indicator element 1 is in direct contact with an upper part 19 of the handle 5, which is immediately above the handle 5, and with a lower part 20 of the handle 5, which is immediately under the handle 5.

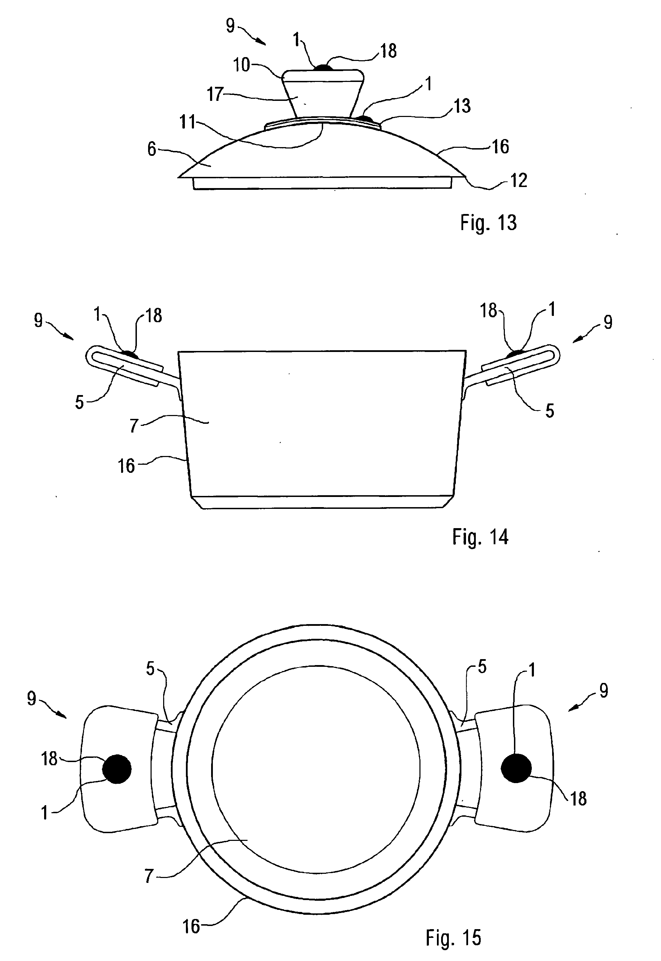

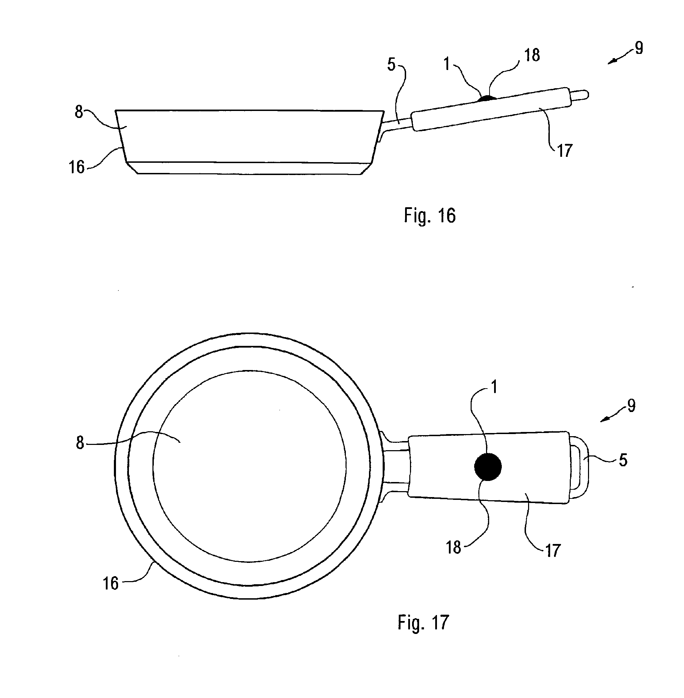

Referring to the embodiments shown in Figures 13 to 17, the thermal indicator element 1 comprises a spherical cap 18 associated with a portion of the insulating means 17. The spherical cap 18 protrudes from the insulating means 17 in the direction of the user's view, as the cooking item is in use. The thermal indicator element 1 may be placed in the knob 10 and/or in the shell 13 of the lid 6, as shown in Figure 13, or in the handles 5 of the pot 7 or of the pan 8 as Figures 14, 15, 16 and 17 show, and however arranged so as to indicate when the temperature of the gripping means 9 exceeds the threshold thermal condition established for user's safety.

In another embodiment, not shown, the substantially annular body of the thermal indicator element surrounds the external wall of the vessel containing the products to be cooked. In this case, a user may handle the vessel by gripping the thermal indicator element, in which handle means is obtained.

## Claims

1. Cooking item (6, 7, 8) comprising gripping means (9) and a thermal indicator element (1), **characterised in that** said thermal indicator element (1) is so arranged and configured as to visually indicate that a threshold thermal condition of an intended gripping part of said gripping means (9) has occurred.

2. Cooking item according to claim 1, wherein said thermal indicator element (1) is made of a thermochromatic material.

3. Cooking item according to any one of the preceding claims, wherein said thermal indicator element (1) is so shaped as to at least partially surround a portion of said cooking item (6, 7, 8).

4. Cooking item according to claim 3, wherein said gripping means (9) comprises said portion.

5. Cooking item according to any one of the preceding claims, wherein said gripping means (9) comprises a handle (5).

6. Cooking item according to any one of the preceding claims, wherein said gripping means (9) comprises a knob (10).

7. Cooking item according to any one of the preceding claims, wherein said thermal indicator element (1) has a substantially annular body (2).

8. Cooking item according to claim 7, wherein said substantially annular body (2) has a looped transverse section.

9. Cooking item according to claim 8, wherein said substantially annular body (2) encircles vessel means of said cooking item (6, 7, 8).

10. Cooking item according to any one of the preceding claims, wherein said thermal indicator element (1) is made of a thermal insulating material.

11. Cooking item according to any one of the preceding claims, wherein said thermal indicator element (1) protrudes at least partially from an outline of said cooking item (6, 7, 8).

12. Cooking item according to claim 11, wherein said thermal indicator element (1) protrudes from said gripping means (9) .

13. Cooking item according to claims 12, wherein said thermal indicator element (1) is shaped as a spherical cap (18).

14. Cooking item according to any one of the preceding claims, wherein said gripping means (9) comprises insulating means (17).

15. Cooking item according to claim 2, or any one of the claims 3 to 14, as appended to claim 2, wherein said thermochromatic material changes colour reversibly.

16. Use of a thermal indicator element made of thermochromatic material as indicator of a threshold thermal condition of an intended gripping part of gripping means in a cooking item.
